# EUROPÄISCHE PATENTANMELDUNG

(11) **EP 2 226 785 A1**
(43) Veröffentlichungstag der Anmeldung: **08.09.2010**
(21) Anmeldenummer: 09003244.2
(22) Anmeldetag: 06.03.2009
(51) Int. Cl.: G09F 27/00, G06Q 30/00, H04W 4/14

(54) **Verfahren zum Aufschalten einer visuellen Information auf zumindest eine Informationen wiedergebende Fläche und Vorrichtung zur Durchführung des Verfahrens**

(71) Anmelder: Neufeld, Alexander, 30457 Hannover (DE)
(72) Erfinder: Neufeld, Alexander, 30457 Hannover (DE)
(74) Vertreter: Jabbusch, Matthias

(57) **Zusammenfassung**

Bei einem Verfahren zum Aufschalten einer visuellen Information auf zumindest eine Informationen wiedergebende Fläche (5), wobei wenigstens eine vorzugsweise in der Nähe der Fläche angeordnete Sendeeinrichtung für die Information verwendet wird, ist vorgesehen, dass als Sendeeinrichtung ein Mobiltelefon oder eine ähnliche SMS-Versendeeinheit verwendet wird, dass mit dem Mobiltelefon eine SMS-Mitteilung an eine Datenbank (1) gesendet wird und dass der Inhalt der SMS in der Datenbank (1) für den Benutzer der Informationen wiedergebenden Fläche (5) zum Abruf bereit gehalten wird.

## Beschreibung

Die Erfindung betrifft ein Verfahren zum Aufschalten einer visuellen Information auf zumindest eine Informationen wiedergebende Fläche, wobei wenigstens eine vorzugsweise in der Nähe der Fläche angeordnete Sendeeinrichtung für die Information verwendet wird. Die Erfindung betrifft des Weiteren eine Vorrichtung zum Aufschalten einer visuellen Information auf zumindest eine Informationen wiedergebenden Fläche, zur Durchführung des vorgenannten Verfahrens, umfassend zumindest eine Informationen wiedergebende Fläche und zumindest eine vorzugsweise in der Nähe dieser Fläche angeordnete Sendeeinrichtung für die Information.

In Orten des Zusammentreffens von Personen zu kulturellen oder anderen Freizeitzwecken werden regelmäßig Flächen angeordnet, die Informationen wiedergeben. Diese Flächen können Bildschirme sein oder auch Leinwände, die mit einem Projektor angestrahlt werden.

Bei einem Zusammentreffen vieler Menschen treffen auch viele Konsumenten zusammen, so dass es für die Anbieter von Waren und Dienstleistungen lukrativ ist, diesen Menschen Werbung zuzuführen. Anbieter von Produkten und Dienstleistungen sind unter Umständen selbst unter diesen Personen, so dass sie beim Zusammentreffen mit vielen Personen das Ziel realisieren wollen, gerade jetzt eine Information über die eigenen Produkte und Dienstleistungen zu geben.

Der Erfindung liegt die Aufgabe zugrunde, ein Verfahren sowie eine Vorrichtung aufzuzeigen, mit denen spontan eine Information auf ein oder mehrere derartige Flächen aufgeschaltet werden kann.

Verfahrensseitig ist diese Aufgabe erfindungsgemäß dadurch gelöst, dass als vorzugsweise in der Nähe der Fläche angeordnete Sendeeinrichtung ein Mobiltelefon oder eine ähnliche SMS-Versendeeinheit verwendet wird, dass mit dem Mobiltelefon eine SMS-Mitteilung an eine Datenbank gesendet wird und dass der Inhalt der SMS auf der Datenbank für den Benutzer der Informationen wiedergebenden Fläche zum Abruf bereitgehalten wird.

Personen, die über eigene Produkte und Dienstleistungen über eine derartige Fläche informieren wollen, haben ganz regelmäßig ein Mobiltelefon bei sich. Mit diesem Mobiltelefon sind sie in der Lage, SMS-Nachrichten, also Kurznachrichten zu versenden. Die Kurznachrichten können neben Texten auch Bilder oder sogar kleine Filme enthalten, so dass sie als so genannte Multi-Media-Messages verschickt werden. Dieses Versenden nutzt das erfindungsgemäße Verfahren dadurch aus, dass für das Aufschalten einer z.B. Werbung auf einem Monitor bei einer Ansammlung vieler Menschen mit einem Mobiltelefon ausgelöst werden kann. Der Benutzer des Mobiltelefons versendet eine SMS an die erfindungsgemäß vorgesehene Datenbank, von dieser Datenbank kann dann der Inhalt der SMS abgerufen werden. Eine SMS geht dabei vorzugsweise nicht direkt bei einer Datenbank ein, sondern bei einem mit der Datenbank zusammenarbeitenden Mobilfunkprovider. Dieser sendet die Nachricht beispielsweise über das Internet an die Datenbank. Das Das Abrufen erfolgt gleichfalls über Nachrichtenwege z.B. das Internet, die es ermöglichen, den Inhalt der SMS auf einen Monitor oder auf einer Leinwand wiederzugeben.

Durch den Abruf von derartigen Werbenachrichten wird der Ort für eine kulturelle Veranstaltung, wie eine Diskothek, mit einer Datenbank verknüpft, welche Werbeinformationen enthält. Der Betreiber der Diskothek ruft die Werbe-Nachrichten von der Datenbank ab. Für den das Mobiltelefon benutzenden Werbenden besteht die Möglichkeit, an jedem Ort spontan seine Werbung in Gang zu setzen.

Nach einer ersten Weiterbildung der Erfindung wird vor Versenden der SMS diese mit einer Codierung versehen und wird in der Datenbank die Codierung jeder SMS ausgelesen. Mit der Codierung kann der Werbende einstellen, auf welchem Monitor oder welcher Leinwand seine Nachricht erscheinen soll. Diese Codierung kann beispielsweise ein Anfangstext "L86" sein, welche einen Hinweis auf eine Leinwand 86 gibt. In der Datenbank wird diese codiere Nachricht für den richtigen Adressaten gespeichert. Das Kürzel "L86" wird dabei abgetrennt und die eigentliche Nachricht in der Datenbank abgelegt. Außerdem wird vorzugsweise eine Kontrolle des Inhalts der Nachricht vorgenommen, um verletzende bzw. strafrechtlich relevante Inhalte vor einem Abruf durch Dritte auszuschließen.

Nach einer Weiterbildung der Erfindung können von der Datenbank Nachrichten periodisch abgerufen werden.

Zur vorrichtungsseitigen Lösung der Aufgabe, für die selbstständiger Schutz beansprucht wird, ist vorgesehen, dass die Sendeeinrichtung ein Mobiltelefon oder eine ähnliche SMS-Versendeeinheit ist, dass der Informationen wiedergebenden Fläche eine Datenbank zugeordnet ist, welche mit wenigstens einem Mobilfunkprovider verbindbar ist, und dass die Datenbank und die Informationen wiedergebende Fläche miteinander verknüpft sind.

Die Datenbank und der Versender einer Werbenachricht kommunizieren miteinander über das Mobiltelefonnetz. Die Datenbank ist dazu mit einem Mobilfunkprovider verbunden, welcher SMS empfangen kann. Dem Mobilfunkprovider kann eine Premium SMS-Nummer zugeordnet werden, welche das Zusenden von SMS-Nachrichten zu einem festgelegten höheren Entgelt ermöglicht. In diesem höheren Entgelt sind die Kosten des Werbenden enthalten. Die Datenbank und die Informationen wiedergebende Fläche sind miteinander verknüpft, beispielsweise über ein Kabelsystem oder über eine drahtlose Verbindung.

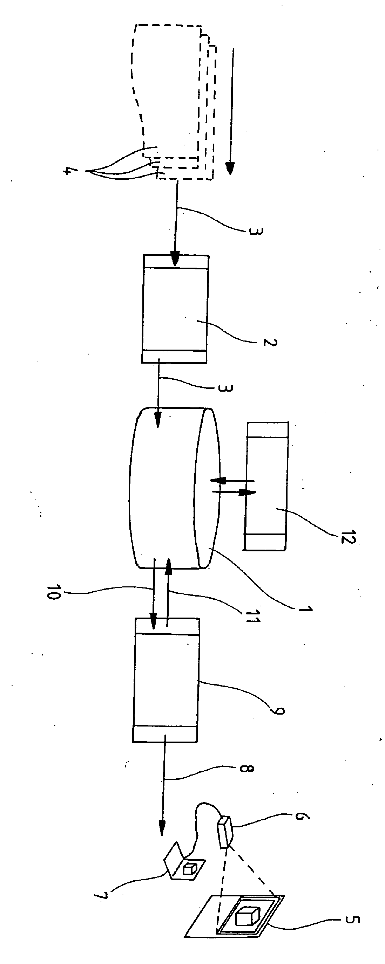

Ein Ausführungsbeispiel der Erfindung, aus dem sich weitere erfinderische Merkmale ergeben, ist in der Zeichnung dargestellt. Die Zeichnung zeigt eine schematische Ansicht der erfindungsgemäßen Vorrichtung zum Aufschalten einer visuellen Information auf eine Fläche.

Die einzige Figur der Zeichnung zeigt die Datenbank 1 der Vorrichtung. Der Datenbank 1 ist ein Mobilfunkprovider zugeordnet, welche entlang des Pfeils 3 SMS-Nachrichten 4 empfangen kann.

Auf der anderen Seite der Datenbank 1 ist eine Informationen wiedergebende Fläche 5 angeordnet. Diese Fläche 5 wird mit einem Projektor 6 bestrahlt, der seine Informationen aus einem Computer 7 bezieht. Dieser Computer 7 ist entlang des Pfeils 8 vorzugsweise über das Internet mit einer Abrufeinheit 9 verknüpft, welche entlang der Pfeile 10 und 11 mit der Datenbank 1 verschaltet ist. Die Abrufeinheit 9 kann auf einem Server der Datenbank 1 angeordnet sein. Es ist auch möglich, die Abrufeinheit auf dem Computer 7 anzuordnen. Der Computer 7 würde dann über die mit den Pfeilen 10 und 11 gekennzeichneten Verschaltungen mit der Datenbank 1 kommunizieren.

An Stelle der als Leinwand ausgebildeten Fläche 5 können auch Bildschirme oder Monitore eingesetzt werden. Von der Abrufeinheit 9 kann der Inhalt einer Premium-SMS in bestimmten Abständen zur sequenziellen Abrufung bereitgestellt werden. Es können aber auch nacheinander verschiedene Nachrichten abgerufen werden, beispielsweise in einem Zeitintervall von 20 Sekunden. Jede Nachricht bleibt mindestens 20 Sekunden auf der Anzeige, bis sie von der nächsten überschrieben wird. Alternativ kann eine Nachricht auf der Leinwand bleiben, bis die nächste neue Nachricht ankommt und die vorhandene überschreibt. Die bereits angezeigten Nachrichten kommen nicht mehr zum Vorschein.

Der Datenbank 1 ist noch eine Administration 12 zugeordnet, welche SMS-Nachrichten verwaltet und archiviert.

## Patentansprüche

1. Verfahren zum Aufschalten einer visuellen Information auf zumindest eine Informationen wiedergebende Fläche, wobei wenigstens eine vorzugsweise in der Nähe der Fläche angeordnete Sendeeinrichtung für die Information verwendet wird,
**dadurch gekennzeichnet,**
**dass** als Sendeeinrichtung ein Mobiltelefon oder eine ähnliche SMS-Versendeeinheit verwendet wird, dass mit dem Mobiltelefon eine SMS-Mitteilung an eine Datenbank (1) gesendet wird und dass der Inhalt der SMS in der Datenbank (1) für den Benutzer der Informationen wiedergebenden Fläche (5) zum Abruf bereit gehalten wird.

2. Verfahren nach Anspruch 1, **dadurch gekennzeichnet, dass** vor Versenden der SMS diese mit einer Codierung versehen wird und dass in der Datenbank die Codierung jeder SMS-Nachricht aufgelesen wird.

3. Verfahren nach Anspruch 1 oder 2, **dadurch gekennzeichnet, dass** von der Datenbank (1) Nachrichten periodisch abgerufen werden können.

4. Vorrichtung zum Aufschalten einer visuellen Information auf zumindest eine Informationen wiedergebende Fläche zur Durchführung des Verfahrens nach einem der Ansprüche 1 bis 3, umfassend zumindest eine Informationen wiedergebende Fläche und zumindest eine vorzugsweise in der Nähe dieser Fläche angeordnete Sendeeinrichtung für die Information,
**dadurch gekennzeichnet,**
**dass** die Sendeeinrichtung ein Mobiltelefon oder eine ähnliche SMS-Versendeeinheit ist, dass der Informationen wiedergebenden Fläche (5) eine Datenbank (1) zugeordnet ist, welche mit wenigstens einem Mobilfunkprovider (2) verbindbar ist, und dass die Datenbank (1) und die Informationen wiedergebende Fläche (5) miteinander verknüpft sind.
